# EUROPEAN PATENT APPLICATION

(11) **EP 3 012 720 A1**
(43) Date of publication of application: **27.04.2016**
(21) Application number: 14837507.4
(22) Date of filing: 24.06.2014
(51) Int. Cl.: G06F 3/042, G02B 6/122

(54) **INPUT DEVICE**

(30) Priority: 21.08.2013 JP 2013171352; 09.05.2014 JP 2014097532
(71) Applicant: Nitto Denko Corporation, Ibaraki-shi, Osaka 567-8680 (JP)
(72) Inventor: SHIMIZU, Yusuke, Ibaraki-shi Osaka 567-8680 (JP); YOSHIOKA, Ryoma, Ibaraki-shi Osaka 567-8680 (JP)
(74) Representative: Hoffmann Eitle
(86) International application number: PCT/JP2014/066609
(87) International publication number: WO 2015/025609

(57) **Abstract**

There is provided an input device capable of retrieving inputted information from data stored in a storage means in a short time. This input device includes : an optical waveguide W in a sheet form including an under cladding layer 1 in a sheet form, a plurality of linear cores 2 arranged in a lattice form and formed on a surface of the under cladding layer 1, and an over cladding layer 3 in a sheet form formed to cover the cores 2; a light-emitting element 4 connected to one end surface of the cores 2 of the optical waveguide W; a light-receiving element 5 connected to the other end surface of the cores 2; and a storage means for storing therein information inputted to an input region. A specific region A is defined in part of the input region. The input device further includes a management information recognition means for recognizing a management number inputted into the specific region A as management information for management of a note inputted to part of the input region which lies outside the specific region A. The management number and the note are stored in a pair in the storage means. This allows the retrieval of the note from the storage means in a short time, using the management number as a code.

## Description

### TECHNICAL FIELD

The present invention relates to an input device including an optical position detection means.

### BACKGROUND ART

A position sensor for optically sensing a pressed position has been hitherto proposed (see PTL 1, for example). This position sensor is configured such that a plurality of cores serving as optical paths are arranged in two directions perpendicular to each other and such that a cladding covers peripheral edge portions of the cores to provide a sheet form. The position sensor is also configured such that light from a light-emitting element is incident on one end surface of the cores and such that the light passing through the cores is received by a light-receiving element at the other end surface of the cores. When part of the surface of the position sensor in the sheet form is pressed with a finger and the like, some of the cores corresponding to the pressed part are crushed (decreased in cross-sectional area thereof as seen in the pressed direction). The level of light received by the light-receiving element is decreased in the cores corresponding to the pressed part, so that the pressed position is sensed.

An input device having a pressure-sensitive touch panel and a display has been proposed as an input device for inputting information such as a character (see PTL 2, for example). This input device is configured such that, when a character or the like is inputted onto the pressure-sensitive touch panel with a pen, the pressure-sensitive touch panel senses the position pressed with the tip of the pen to output the pressed position to the display, so that the inputted character or the like appears on the display.

### RELATED ART DOCUMENT

### PATENT DOCUMENT

PTL 1: JP-A-HEI8(1996)-234895
PTL 2: JP-A-2006-172230

### SUMMARY OF INVENTION

For storage of inputted information into the aforementioned input device, it is customary to provide a storage means such as a memory in the input device. The increase in the number of times that information is inputted into the input device increases the amount of data stored in the storage means. In this case, it is a time-consuming operation to retrieve a certain piece of inputted information from a large amount of data stored in the storage means so as to reproduce (display) the certain piece of inputted information with the use of a reproducing terminal such as a personal computer (referred to hereinafter as a "PC") and a mobile device.

In view of the foregoing, it is therefore an object of the present invention to provide an input device capable of retrieving inputted information from data stored in a storage means in a short time.

To accomplish the aforementioned object, an input device according to the present invention comprises: an optical waveguide in a sheet form including an under cladding layer in a sheet form, a plurality of linear cores arranged in a lattice form on a surface of the under cladding layer, and an over cladding layer in a sheet form covering the cores; a light-emitting element connected to one end surface of the cores of the optical waveguide; a light-receiving element connected to the other end surface of the cores; a storage means for storing information; and a management information recognition means for recognizing management information, wherein light emitted from the light-emitting element passes through the cores of the optical waveguide and is received by the light-receiving element, wherein a surface part of the over cladding layer corresponding to part of the linear cores arranged in the lattice form of the optical waveguide serves as an input region, wherein a pressed position is specified as input information, based on a change in the amount of light propagating in the cores, when the input region is pressed at any position, wherein the storage means stores the specified input information therein, wherein part of the input region is defined as a specific region, and wherein the management information recognition means recognizes input information inputted by pressing the inside of the specif ic region as management information which is used for management of input information inputted by pressing part of the input region which lies outside the specific region.

For the use of the input device according to the present invention, a user inputs information (information for management such as a management number) for management of input information into the specific region defined in part of the input region of the input device, and inputs information (such as a note) which he/she wants to store to part of the input region which lies outside the specific region. The information for management and the information which the user wants to store are stored in pairs in the storage means. At this time, the management information recognition means recognizes the information (such as a management number) for management inputted into the specific region as the management information for management of the information (such as a note) inputted to part of the input region which lies outside the specific region. For reproduction of the information (the input information such as a note) inputted on one occasion from the storage means, the aforementioned information is retrieved from data stored in the storage means in a short time, using the information (the management information recognized by the management information recognition means) for management inputted on that occasion as a code.

The input device according to the present invention includes the specific region defined in part of the input region, and the management information recognition means which recognizes the information inputted into the specific region as the management information (such as a management number) for management of the information (such as a note) inputted to part of the input region which lies outside the specific region. The input information inside the specific region and the input information outside the specific region are stored in pairs in the storage means. When the number of times that information is inputted is increased (the amount of data stored in the storage means is increased), the information (such as a note) inputted to part of the input region which lies outside the specific region on one occasion is retrieved from the storage means in a short time, using the management information (such as a management number) inputted into the specific region on that occasion as a code.

### BRIEF DESCRIPTION OF DRAWINGS

[FIG. 1] FIG. 1A is a plan view schematically showing one embodiment of an input device according to the present invention, and FIG. 1B is an enlarged sectional view of principal parts thereof.
[FIG. 2] FIG. 2 is an illustration showing an example of a flow diagram for a CPU program in the input device.
[FIG. 3] FIG. 3 is an illustration showing an example of the flow diagram for the CPU program in the input device.
[FIG. 4] FIGS. 4A to 4F are enlarged plan views schematically showing configurations of intersection of linear cores arranged in a lattice form in the input device.
[FIG. 5] FIGS. 5A and 5B are enlarged plan views schematically showing paths of light at intersections of the linear cores arranged in the lattice form.

### DESCRIPTION OF EMBODIMENTS

Next, an embodiment according to the present invention will now be described in detail with reference to the drawings.

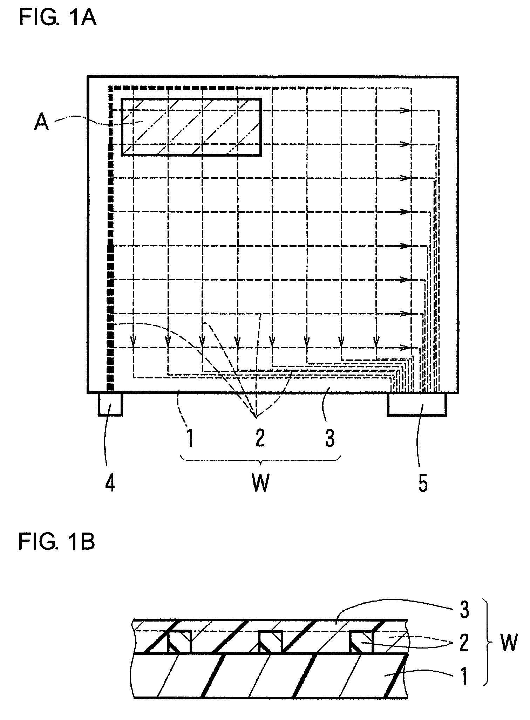

FIG. 1A is a plan view showing one embodiment of an input device. FIG. 1B is a sectional view, on an enlarged scale, of a middle portion of the input device. The input device of this embodiment includes: an optical waveguide W in a rectangular sheet form configured such that linear cores 2 arranged in a lattice form are held between an under cladding layer 1 and an over cladding layer 3 both in a rectangular sheet form; a light-emitting element 4 connected to one end surface of the linear cores 2 arranged in the lattice form; and a light-receiving element 5 connected to the other end surface of the linear cores 2. Light emitted from the light-emitting element 4 passes through the cores 2 and is received by the light-receiving element 5. A surface part of the over cladding layer 3 corresponding to part of the linear cores 2 arranged in a lattice form serves as an input region. The input device further includes a CPU (not shown) for controlling the input device, and a storage means (not shown) such as a memory for storing therein information (information about the movement locus of a pressed position with a pen tip, a finger tip and the like) inputted to the input region. In FIG. 1A, the cores 2 are indicated by broken lines, and the thickness of the broken lines indicates the thickness of the cores 2. Also, in FIG. 1A, the number of cores 2 are shown as abbreviated. Arrows in FIG. 1A indicate the directions in which light travels.

A specific region A of a rectangular shape [a diagonally shaded part in FIG. 1A] is defined in part [an upper left part in FIG. 1A] of the input region. A program (management information recognition means) is incorporated in the CPU so that input information inputted into the specific region A with a pen, a finger and the like is recognized as management information (such as a management number) for management of input information (such as a note) inputted to part of the input region which lies outside the specific region A with a pen, a finger and the like. For ease of recognition of the position of the specific region A, it is preferable that the specific region A is enclosed by lines or is colored.

The input information (such as a management number) inside the specific region A and the input information (such as a note) outside the specific region A are stored in pairs in the storage means. This allows the retrieval of the information (such as a note) inputted to the input region outside the specific region A from the storage means in a short time, using the management information (such as a management number) inputted into the specific region A as a code.

An example of the management information recognition means (program) incorporated in the CPU includes OCR (Optical Character Recognition) software. Such OCR software optically detects the movement locus of a pen tip and the like to identify a character by comparison with previously stored character patterns, thereby recognizing the character inputted with the pen and the like as character data (digital data).

More specifically, the input of information using the input device is as follows. First, a user inputs information (such as a management number comprised of an array of alphanumeric characters and the like) for management of input information into the specific region A, and inputs information which he/she wants to store such as a note to part of the input region which lies outside the specific region A. At this time, a press with a pen tip, a finger tip and the like decreases the amount of light propagating in the cores 2 in the pressed part, so that the intensity of light received by the light-receiving element 5 is lowered in that part of the cores 2. Thus, the position (coordinates) of the pen tip, the finger tip and the like (pressedpart) is detected. A locus of the pressed position with the pen tip and the finger tip is stored in the storage means as the input information such as a character, a drawing and a mark.

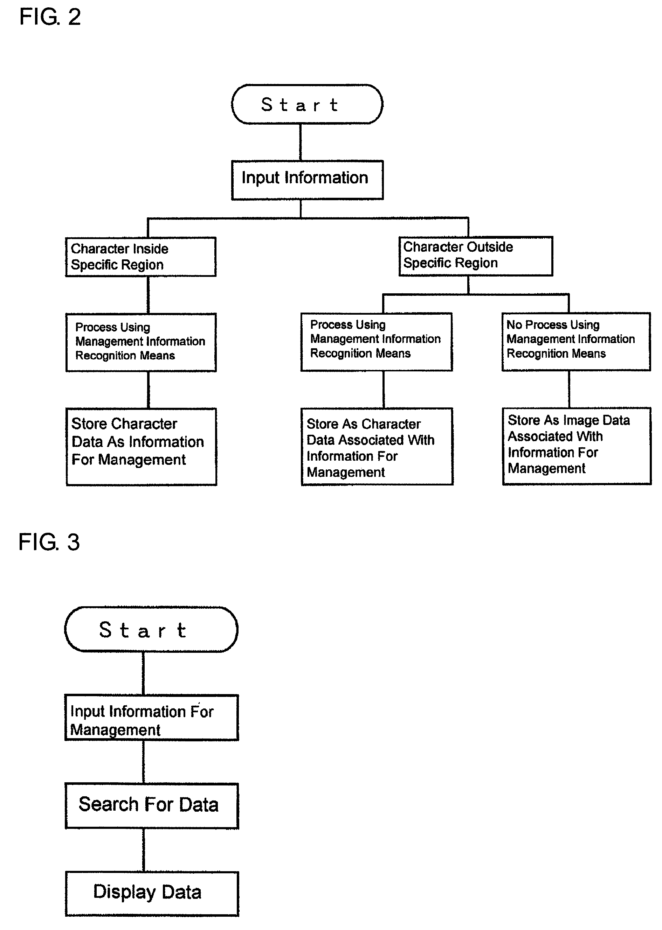

In this embodiment, the management information recognition means (program) incorporated in the CPU recognizes the information for management (such as a management number) inputted into the specific region A at this time as the management information (character data such as a management number) for management of the information (such as a note) inputted to part of the input region which lies outside the specific region A, as shown in flow diagram of FIG. 2. Also, the information (such as a note) inputted to part of the input region which lies outside the specific region A in association with the aforementioned management information is recognized as image data or character data.

For reproduction of the information (the aforementioned input information such as a note) inputted to part of the input region which lies outside the specific region A on one occasion from the storage means, the aforementioned information is retrieved from the data stored in the storage means in a short time, using the management number and the like (management information recognized by the management information recognition means) inputted into the specific region A on that occasion as a code. At this time, a user connects the input device to a reproducing terminal (such as a PC and a mobile device) with a connecting cable such as a micro USB cable, and inputs the management information (character data such as a management number) to the reproducing terminal, as shown in flow diagram of FIG. 3. Then, the inputted management information is searched for. As a result, the data (the aforementioned input information such as a note) stored in association with the management information appears on a display of the reproducing terminal.

The input device may be connected to a PC during the input operation. In this case, for example, information such as a document is displayed on a display of the PC. In that state, a user inputs information such as a character to the input region of the input device with a pen, a finger and the like as described above. Thus, the locus of the pen tip, the finger tip and the like is detected by the input device, and is also transmitted as a signal to the PC by radio or through a connecting cable to thereby appear on the display. Thus, the information such as a character inputted by means of the input device which is superimposed on the information such as a document is displayed on the display. The displayed information may be stored in an information storage medium such as a hard disk in the PC and an external USB memory device.

Software (program) for converting coordinates in the input region of the input device into coordinates on the screen of the display to display a character and the like inputted by means of the input device on the display is incorporated in the PC used herein for the purpose of displaying the character and the like inputted in the input region of the input device in a position on the display corresponding to the input position.

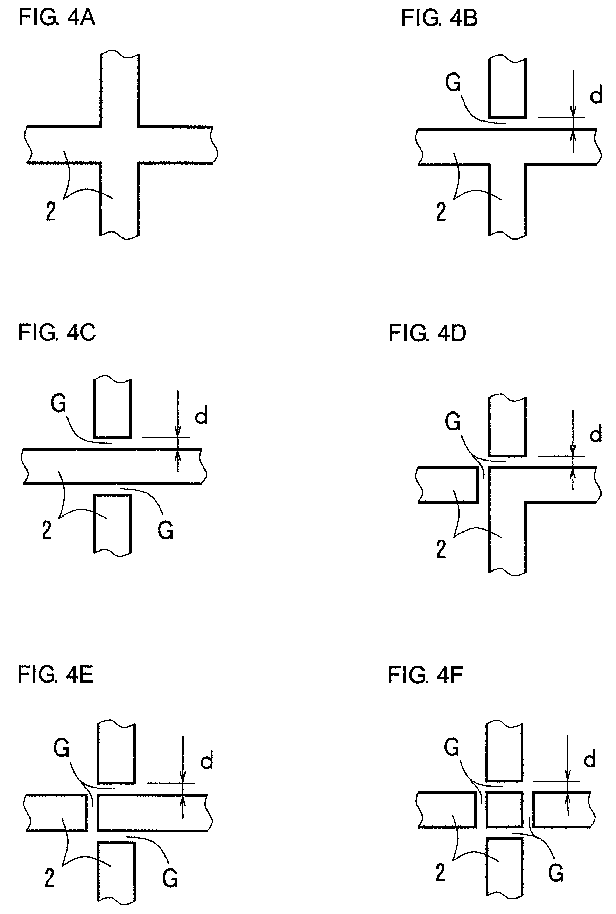

Each intersection of the linear cores 2 arranged in the lattice form is generally configured to be continuous in all of the four intersecting directions as shown in enlarged plan view in FIG. 4A in the aforementioned embodiment, but may be of other configurations. For example, each intersection may be separated by a gap G to become discontinuous only in one of the intersecting directions, as shown in FIG. 4B. The gap G is made of a material for the formation of the under cladding layer 1 or the over cladding layer 3. The gap G has a width d greater than 0 (zero) (it is only necessary that the gap G is formed) and generally not greater than 20 µm. Likewise, as shown in FIGS. 4C and 4D, each intersection may be discontinuous in two intersecting directions (in two opposed directions in FIG. 4C, and in two adjacent directions in FIG. 4D). Alternatively, each intersection may be discontinuous in three intersecting directions, as shown in FIG. 4E. Also, each intersection may be discontinuous in all of the four intersecting directions, as shown in FIG. 4F. Further, the cores 2 may be in a lattice form including two or more types of intersections shown in FIGS. 4A to 4F. The term "lattice form" formed by the linear cores 2 as used in the present invention shall be meant to include a lattice form in which part or all of the intersections are formed in the aforementioned manner.

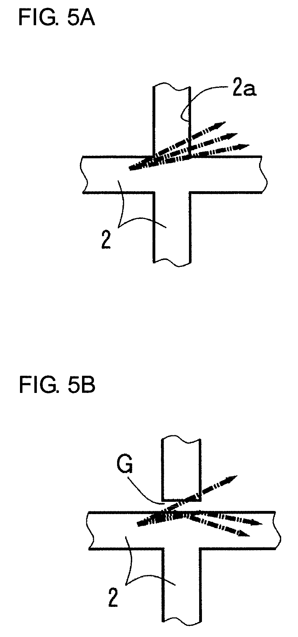

In particular, intersections which are discontinuous in at least one intersecting direction as shown in FIGS. 4B to 4F are capable of reducing intersection losses of light. At an intersection which is continuous in all of the four intersecting directions as shown in FIG. 5A, attention will be given on one intersecting direction (upward direction as seen in FIG. 5A). Then, part of light incident on the intersection reaches a wall surface 2a of a first core 2 perpendicular to a second core 2 through which the light travels, and is transmitted through the first core 2 (with reference to dash-double-dot arrows in FIG. 5A) because of the large angle of reflection from the wall surface. Such light transmission occurs also in the opposite intersecting direction (downward direction as seen in FIG. 5A). As shown in FIG. 5B, on the other hand, when an intersection is made discontinuous by the gap G in one intersecting direction (upward direction as seen in FIG. 5B), an interface between the gap G and a core 2 is formed. Then, part of light transmitted through the core 2 with reference to FIG. 5A is not transmitted through the core 2 but is reflected from the interface to continue traveling through the core 2 (with reference to dash-double-dot arrows in FIG. 5B) because of the smaller angle of reflection at the interface. Based on these facts, the reduction in intersection losses of light is achieved by making the intersection discontinuous in at least one intersecting direction as mentioned above. As a result, the sensitivity for detection of the pressed position with a pen tip and the like is increased.

In the aforementioned embodiment, examples of materials for the formation of the cores 2, the under cladding layer 1 and the over cladding layer 3 include photosensitive resins and thermosetting resins. The optical waveguide W may be produced by a manufacturing method depending on the materials. The cores 2 have a refractive index higher than the refractive indices of the under cladding layer 1 and the over cladding layer 3. The adjustment of the refractive indices may be made, for example, by adjusting the selection of the types of the materials for the formation of the cores 2, the under cladding layer 1 and the over cladding layer 3, and the composition ratio thereof. A rubber sheet may be used as the under cladding layer 1, and the cores 2 may be arranged in a lattice form on the rubber sheet.

Also, an elastic layer such as a rubber layer may be provided, as required, on the lower surface of the under cladding layer 1. In this case, when the restoring forces of the under cladding layer 1, the cores 2 and the over cladding layer 3 are weakened or when the under cladding layer 1, the cores 2 and the over cladding layer 3 are originally made of materials having weak restoring forces, the elastic force of the elastic layer may be used to assist the weak restoring forces, thereby allowing the under cladding layer 1, the cores 2 and the over cladding layer 3 to return to their original states after the pressing of the pressed part is released.

Next, an inventive example of the present invention will be described in conjunction with a comparative example. It should be noted that the present invention is not limited to the inventive example.

### EXAMPLES

### [Material for Formation of Over Cladding Layer]

Component a: 30 parts by weight of an epoxy resin (EPOGOSEY PT available from Yokkaichi Chemical Company Limited).
Component b: 70 parts by weight of an epoxy resin (EHPE3150 available from Daicel Corporation).
Component c: 4 parts by weight of a photo-acid generator (CPI-200K available from San-Apro Ltd.).
Component d: 100 parts by weight of ethyl lactate (available from Wako Pure Chemical Industries, Ltd.).

A material for the formation of an over cladding layer was prepared by mixing these components a to d together.

### [Material for Formation of Cores]

Component e: 80 parts by weight of an epoxy resin (EHPE3150 available from Daicel Corporation).
Component f: 20 parts by weight of an epoxy resin (YDCN-700-10 available from Nippon Steel & Sumikin Chemical Co., Ltd.).
Component g: 1 part by weight of a photo-acid generator (SP170 available from ADEKA Corporation).
Component h: 50 parts by weight of ethyl lactate (available from Wako Pure Chemical Industries, Ltd.).

A material for the formation of cores was prepared by mixing these components e to h together.

### [Material for Formation of Under Cladding Layer]

Component i: 75 parts by weight of an epoxy resin (EPOGOSEY PT available from Yokkaichi Chemical Company Limited).
Component j : 25 parts by weight of an epoxy resin (JER1007 available from Mitsubishi Chemical Corporation).
Component k: 4 parts by weight of a photo-acid generator (CPI-200K available from San-Apro Ltd.).
Component 1: 50 parts by weight of ethyl lactate (available from Wako Pure Chemical Industries, Ltd.).

A material for the formation of an under cladding layer was prepared by mixing these components i to 1 together.

### [Production of Optical Waveguide]

The over cladding layer was formed on a surface of a base material made of glass by a spin coating method with the use of the aforementioned material for the formation of the over cladding layer. The over cladding layer had a thickness of 5 µm, an elasticity modulus of 1.2 GPa, and a refractive index of 1.503.

Next, the cores were formed on a surface of the over cladding layer by a photolithographic method with the use of the aforementioned material for the formation of the cores. The cores had a thickness of 30 µm, a width of 100 µm in a portion of a lattice form, a spacing of 600 µm, an elasticity modulus of 3 GPa, and a refractive index of 1.523.

Next, the under cladding layer was formed on the surface of the over cladding layer by a spin coating method with the use of the aforementioned material for the formation of the under cladding layer so as to cover the cores. The under cladding layer had a thickness of 200 µm (as measured from the surface of the over cladding layer), an elasticity modulus of 3 MPa, and a refractive index of 1.503.

Then, a substrate made of PET (having a thickness of 1 mm) with a double-sided adhesive tape (having a thickness of 25 µm) affixed to one surface thereof was prepared. Next, the other adhesive surface of the double-sided adhesive tape was affixed to a surface of the under cladding layer. In that state, the over cladding layer was stripped from the base material made of glass.

### [Production of Input Device]

A light-emitting element (XH85-S0603-2s available from Optowell Co., Ltd. ) was connected to one end surface of the cores of the aforementioned optical waveguide, and a light-receiving element (s10226 available from Hamamatsu Photonics K.K.) was connected to the other end surface of the cores thereof. Then, a circuit was provided on which the light-emitting element, the light-receiving element, a CPU (dsPIC33FJ128MC706 available from Microchip Technology Inc.) for controlling the elements, a wireless module, a memory, a lithium-ion battery (3.7 V) and the like were mounted. Then, a specific region of a rectangular shape measuring 2 cm in vertical dimension by 5 cm in horizontal dimension was defined in the upper left corner of an input region. The aforementioned OCR (Optical Character Recognition) software (program) for recognizing characters inputted into the specific region with a pen as character data was incorporated in the aforementioned CPU. In this manner, an input device in Inventive Example was produced.

### [Comparative Example]

An input device in Comparative Example was prepared such that the specific region was not defined in the input region and the aforementioned OCR software was not incorporated in the aforementioned CPU in Inventive Example.

### [Operation Check of Input Device]

A personal computer was further prepared. Software (program) for converting coordinates in the input region of the optical waveguide of the input device in each of Inventive and Comparative Examples into coordinates on the screen of a display to display a character and the like inputted by means of the input device on the display is incorporated in the personal computer. The personal computer included a receiving means so as to be able to receive radio waves (information) from a wireless module of the input device. The personal computer and the input device were connected for transmission of information therebetween by radio.

The input device in each of Inventive and Comparative Examples was placed on a desk. In Inventive Example, a user entered characters as a management number into the specif ic region (intheupperleftcorner) defined in the input region, and thereafter wrote a note using a character, a figure and the like on the outside of the specific region. The user performed such an operation one hundred times using different management numbers and different notes, respectively. In Comparative Example, the user performed substantially the same operation as in Inventive Example except that he/she did not enter the aforementioned management numbers and wrote the same note.

As a result, the inputted notes could be stored in the memory in Inventive and Comparative Examples. For reproduction of a note inputted at a certain time among the one hundred times from the memory, the note could be searched for by inputting a corresponding one of the management numbers to the personal computer, and could be immediately displayed on the display in Inventive Example, but it required much longer time in Comparative Example than in Inventive Example to retrieve the note from the memory.

Although specific forms in the present invention have been described in the aforementioned example, the aforementioned example should be considered as merely illustrative and not restrictive. It is contemplated that various modifications evident to those skilled in the art could be made without departing from the scope of the present invention.

The input device according to the present invention is applicable to the retrieval of inputted information such as a character, a drawing and a mark from data stored in the storage means in a short time.

### REFERENCE SIGNS LIST

- W: Optical waveguide
- A: Specific region
- 1: Under cladding layer
- 2: Cores
- 3: Over cladding layer
- 4: Light-emitting element
- 5: Light-receiving element

## Claims

1. An input device comprising:
an optical waveguide in a sheet form including an under cladding layer in a sheet form, a plurality of linear cores arranged in a lattice form on a surface of the under cladding layer, and an over cladding layer in a sheet form covering the cores;
a light-emitting element connected to one end surface of the cores of the optical waveguide;
a light-receiving element connected to the other end surface of the cores;
a storage means for storing information; and
a management information recognition means for recognizing management information,
wherein light emitted from the light-emitting element passes through the cores of the optical waveguide and is received by the light-receiving element,
wherein a surface part of the over cladding layer corresponding to part of the linear cores arranged in the lattice form of the optical waveguide serves as an input region,
wherein a pressed position is specified as input information, based on a change in the amount of light propagating in the cores, when the input region is pressed at any position,
wherein the storage means stores the specified input information therein,
wherein part of the input region is defined as a specific region, and
wherein the management information recognition means recognizes input information inputted by pressing the inside of the specific region as management information which is used for management of input information inputted by pressing part of the input region which lies outside the specific region.
